(19) Europäisches Patentamt
European Patent Office
Office européen des brevets

(11) EP 0 527 078 B1

(12) FASCICULE DE BREVET EUROPEEN

(45) Date de publication et mention de la délivrance du brevet: **14.02.1996 Bulletin 1996/07**

(51) Int Cl.$^6$: **D06M 14/06**

(21) Numéro de dépôt: **92402159.5**

(22) Date de dépôt: **27.07.1992**

# (54) Procédé d'ignifugation de matériaux textiles

Verfahren zum Feuerfestmachen von textilen Materialien

Process for fireproofing of textile materials

(84) Etats contractants désignés:
**BE CH DE GB IT LI NL**

(30) Priorité: **05.08.1991 FR 9110247**

(43) Date de publication de la demande:
**10.02.1993 Bulletin 1993/06**

(73) Titulaire: **Centre Technique Industriel dit: INSTITUT TEXTILE DE FRANCE**
**F-92223 Bagneux Cédex (FR)**

(72) Inventeurs:
- **Chatelin, Roger**
  **F-69380 Lissieu par Lozanne (FR)**
- **Gavet, Louis**
  **F-69005 Lyon (FR)**

(74) Mandataire: **Hennion, Jean-Claude et al**
**F-59800 Lille (FR)**

(56) Documents cités:
**US-A- 3 817 779**

- **CHEMICAL ABSTRACT, vol. 87, no. 10, 5 septembre 1977, page 73, colonne 1, résumé no. 69694t, Columbus, Ohio, US; & JP-A-77 55 796 (M. BAN) 07-05-1977**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1)Convention sur le brevet européen).

EP 0 527 078 B1

## Description

La présente invention concerne l'ignifugation de matériaux textiles en soie notamment d'articles destinés à l'ameublement. Elle concerne plus particulièrement un procédé pour rendre ininflammable ces matériaux, selon les normes en vigueur, en mettant en oeuvre la technique de greffage.

Il existe bon nombre de traitements d'ignifugation d'articles textiles. Généralement le traitement consiste à déposer en surface de l'article apprêt ignifugeant, contenant des atomes d'azote, de phosphore ou de chlore ; la présence de cet apprêt modifie le toucher de l'article. Un autre type de traitement consiste à modifier chimiquement en surface l'article, en particulier pour créer des complexes à base de zirconium ou de tantale ; ce traitement modifie les caractéristiques de l'article, en particulier peut le fragiliser.

On a déjà proposé au Chemical Abstract, volume 87, N° 10 du 5 septembre 1977, page 73, résumé N°69694t de rendre ignifuges des fibres de soie en les greffant, à l'aide d'un 2-méthacryloyloxy) éthyl phosphate en milieu aqueux, avec un taux de greffage de l'ordre de 45%.

Selon le demandeur un tel taux de greffage modifie le toucher et les caractéristiques de l'article traité.

Le but que s'est fixé le demandeur est de proposer un traitement d'ignifugation qui pallie les inconvénients précités en ce qu'il ne modifie pas sensiblement le toucher ni les caractéristiques de l'article traité.

Ce but est imparfaitement atteint par un procédé de traitement d'ignifugation de la soie qui consiste à greffer la soie à l'aide d'un ester éthylénique de l'acide phosphorique de formule générale

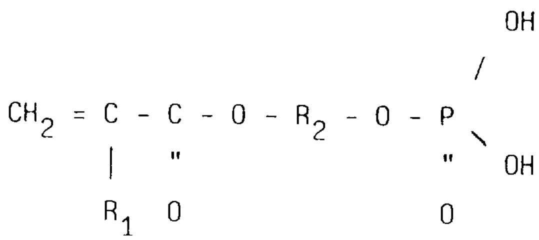

dans laquelle $R_1$ est choisi parmi le groupe constitué par H et les alkyles et $R_2$ est choisi parmi le groupe des alkylènes et des oxydes et/ou polyoxydes d'alkylènes,le taux de greffage étant égal ou inférieur à 20%.

La présence combinée des atomes d'azote du matériau textile et des atomes de phosphore des greffons permet d'apporter au matériau greffé les propriétés d'ignifugation recherchées, le taux de greffage étant suffisamment faible pour qu'il n'y ait pas d'altération sensible ni du toucher ni des caractéristiques du matériau.

Un classement M1 selon la norme française NF P 92.503 a été obtenu avec un taux de greffage qui est d'au moins 5%.

L'ester éthylénique de l'acide phosphorique , qui est préféré est la méthacrylate d'éthylène selon la forme générale précitée dans laquelle $R_1$ est H et $R_2$ est ($CH_2$-$CH_2$).

S'agissant de la soie, on réalise le greffage préférentiellement en plongeant le matériau textile dans une solution aqueuse contenant l'ester éthylénique de l'acide phosphorique et un amorceur de greffage.

Comme amorceur de greffage, on utilise par exemple le persulfate d'ammonium à une concentration de 0,1% environ en poids dans la solution aqueuse de greffage.

Lorsque le rapport de bain est court, de l'ordre de 1/30, la concentration en ester éthylénique de l'acide phosphorique dans la solution aqueuse est au minimum de l'ordre de 1% au poids. C'est dans ces conditions qu'est obtenu un taux de greffage de l'ordre de 5%, permettant d'obtenir un classement M1 d'ignifugation. Cependant lorsque le rapport de bain est élevé, supérieur à 1/100, il a été observé que dans des conditions normales conduisant à un taux de greffage important, proche de 20%, le matériau greffé ne répondait pas aux critères requis pour un classement M1.

Grâce au procédé de l'invention, ce résultat négatif inattendu a pu être corrigé en apportant au procédé précité une contrainte complémentaire, à savoir la nécessité d'ajouter dans la solution aqueuse de greffage de l'acide phosphorique pur.

Par exemple pour un rapport de bain de 1/200, et une concentration en ester éthylénique de l'acide phosphorique de 1%, on a ajouté 0,25% en poids d'acide phosphorique pur. Le matériau était greffé à 17% et le classement d'ignifugation était de M1.

On peut tenter d'expliquer ce phénomène en avançant qu'il se produit, particulièrement lorsque le rapport de bain est élevé, une hydrolyse de l'ester éthylénique de l'acide phosphorique entraînant un départ d'acide phosphorique et formation d'un alcool. Ainsi la réaction de greffage a bien lieu, mais le greffon hydrolysé ne comporte plus d'atome de phosphore, indispensable pour obtenir les propriétés d'ignifugation. L'addition dans la solution de greffage d'acide phosphorique permet de limiter cette réaction d'hydrolyse.

La présente invention sera mieux comprise à la lecture de la description qui va être faite de plusieurs exemples de traitement d'ignifugation de la soie par greffage à l'aide d'un ester éthylénique de l'acide phosphorique, parmi lesquels

le troisième exemple illustre le procédé de l'invention.

L'ester éthylénique de l'acide phosphorique qui a été utilisé pour tous les exemples décrits est le méthacrylate d'éthylène glycol phosphaté de formule :

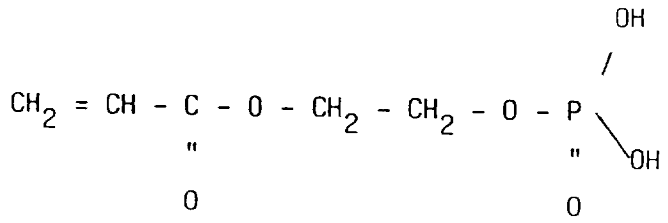

dénommé ci-après par MAEGP.

1° exemple comparatif

Le greffage d'une étoffe de soie est réalisé au laboratoire en tube de verre. La solution aqueuse de greffage contient comme amorceur 0,1% en poids de persulfate d'ammonium. Le rapport de bain est de 1/30. Le temps de séjour de l'échantillon dans la solution est de 2 heures, la solution étant portée à 90°C.

Le tableau 1 ci-dessous donne les valeurs du taux de greffage (A) en fonction des concentrations (C) de la solution de greffage en MAEGP en poids. Le taux de greffage Tg (A) est égal à

$$Tg = \frac{P_1 - P_0}{P_1}$$

dans lequel $P_1$ est le poids du matériau greffé et $P_0$ son poids avant greffage.

| C(%) | 3 | 2,5 | 2 | 1,5 | 1 |
|---|---|---|---|---|---|
| A(%) | 12,4 | 11,0 | 10,2 | 9,8 | 6,9 |

Tous les échantillons de soie greffée ont été soumis à des tests d'ignifugation selon la norme française NFP 92.503 correspondant à unarrêté ministériel de juin 1983 pour les établissements recevant du public et les immeubles de grande hauteur. Ce test vise plus particuliérement les matériaux textiles destinés à l'ameublement.

Tous les échantillons sus-visés ont reçu le classement M1 qui est le meilleur classement possible, la norme NF P 92.503 prévoyant les classements M1 à M4.

Comparativement un échantillon ayant, dans les mêmes conditions opératoires, été greffé à un taux inférieur à 5 % a donné un classement d'ignifugation moins bon.

2° exemple comparatif

Toutes les conditions opératoires du premier exemple sont conservés exception faite du rapport de bain.

Le tableau 2 ci-dessous donne les valeurs du taux de greffage (A) en fonction de la valeur (R) du Rapport de bain.

| R | 1/30 | 1/40 | 1/50 | 1/60 | 1/70 |
|---|---|---|---|---|---|
| A (%) | 12 | 13,5 | 15,3 | 16,2 | 18,5 |

Les mêmes tests d'ignifugation ont été réalisés et tous les échantillons ont reçu le classement M1.

3° exemple

Le greffage d'une étoffe de soie est réalisé, sur des échantillons pesant 150 g, dans un appareil de teinture en acier inoxydable dénommé MINILAB.

Les conditions opératoires sont conservés : durée 2 heures, température de la solution de greffage 90°C, concentration en persulfate d' ammonium 0,1 %.

Le rapport de bain est de 1/200.

La solution aqueuse de greffage contient, en plus de l'amorceur, 1 % en poids de MAEGP et 0,25 % en poids d'acide phosphorique pur.

L'échantillon greffé est rincé d'abord en eau chaude à 60°C puis en eau froide à 15 °C.

Le taux de greffage constaté est de 17 %.

Aux tests d'ignifugation selon la norme NF.P.92.503, le classement obtenu est M1.

Des échantillons greffés dans les conditions ci-dessus ont subi cinq lavages successifs. Le classement d'ignifugation M1 est maintenu. Il en est de même après un dégraissage.

Comparativement un échantillon greffé dans des conditions strictement identiques à celles du présent exemple, mais avec une solution de greffage ne contenant pas l'acide phosphorique avait un taux de greffage équivalent, mais n'obtenait pas le classement M1.

La présente invention n'est pas limitée aux exemples de réalisation qui ont été décrits ci-dessus.

## Revendications

1. Procédé de traitement d'ignifugation de la soie consistant à greffer la soie à l'aide d'un ester éthylénique de l'acide phosphorique de formule générale

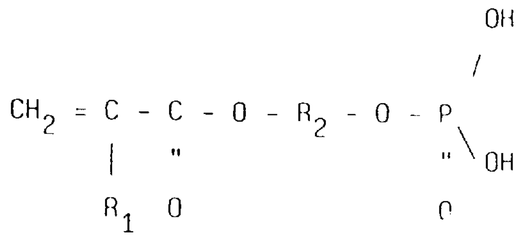

dans laquelle $R_1$ est choisi parmi le groupe constitué par H et les alkyles et $R_2$ est choisi parmi le groupe des alkylènes et des oxydes et/ou polyoxydes d'alkylènes, caractérisé en ce que, le greffage étant réalisé avec un rapport de bain supérieur à 1/100, et à un taux égal ou inférieur à 20%, la solution aqueuse de greffage contient aussi de l'acide phosphorique pur.

2. Procédé selon la revendication caractérisé en ce que, le greffage est réalisé dans les conditions suivantes :

   a. solution aqueuse contenant 1 % en poids de MAEGP, 0,25 % en poids d'acide phosphorique pur , 0,1 % de persulfate d'ammonium,
   b. rapport de bain 1/200,
   c. température de la solution 90°C,
   d. durée 2 heures.

## Patentansprüche

1. Verfahren zum Feuerfestmachen von Seide, das in der Propfung der Seide mit einem Ethylenglykolphosphorsäureester der allgemeinen Formel

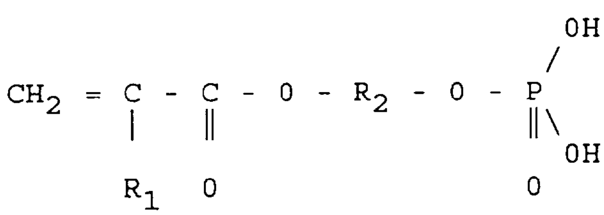

besteht, wobei $R_1$ unter H und Alkylgruppen und $R_2$ unter Alkylengruppen und Oxyalkylengruppen und/oder Poly (oxyalkylen)-Gruppen ausgewählt ist,
dadurch gekennzeichnet, daß
die Pfropfung bei einem Flottenverhältnis von über 1/100 und bis zu einem Pfropfungsgrad von höchstens 20 % durchgeführt wird und die wäßrige Pfropflösung ferner reine Phosphorsäure enthält.

2. Verfahren nach Anspruch 1, dadurch gekennzeichnet, daß die Pfropfung unter folgenden Bedingungen durchgeführt wird:

a. Wäßrige Lösung mit 1 Gew.-% MAEGP, 0,25 Gew.-% reiner Phosphorsäure und 0,1 Gew.-% Ammoniumpersulfat,
b. Badverhältnis 1/200,
c. Temperatur der Lösung 90 °C und
d. Dauer 2 h.

## Claims

**1.** Treatment process for imparting flame retardancy to silk which consists in grafting the silk with a phosphoric acid ethylenic ester of the general formula

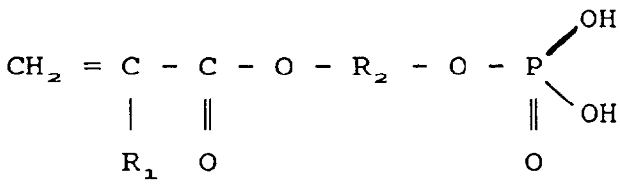

in which $R_1$ is selected from the group comprising H and alkyls and $R_2$ is selected from the group comprising alkylenes and alkylene oxides and/or polyoxides, characterized in that since grafting is carried out with a bath ratio which is more than 1/100 and at a rate less than or equal to 20%, the aqueous grafting solution also contains pure phosphoric acid.

**2.** Process according to claim 1, characterized in that grafting is carried out under the following conditions:

a. aqueous solution containing 1% by weight of PEGMA, 0.25% by weight of pure phosphoric acid, 0.1% of ammonium persulfate,
b. bath ration 1/200,
c. temperature of the solution 90°C,
d. duration 2 hours.